(19) Europäisches Patentamt

European Patent Office

Office européen des brevets

(11) **EP 0 780 257 B1**

## (12) EUROPÄISCHE PATENTSCHRIFT

(45) Veröffentlichungstag und Bekanntmachung des Hinweises auf die Patenterteilung:
**21.03.2001   Patentblatt 2001/12**

(51) Int Cl.⁷: **B60L 3/10**

(21) Anmeldenummer: **96120330.4**

(22) Anmeldetag: **18.12.1996**

(54) **Schleuderschutz-Verfahren**

Anti-skid system

Système à anti-patinage

(84) Benannte Vertragsstaaten:
**CH ES FR GB IT LI**

(30) Priorität: **22.12.1995  DE 19548286**

(43) Veröffentlichungstag der Anmeldung:
**25.06.1997   Patentblatt 1997/26**

(73) Patentinhaber: **MTU Motoren- und Turbinen-Union Friedrichshafen GmbH 88045 Friedrichshafen (DE)**

(72) Erfinder:
• **Butscher, Franz, Dipl.-Ing. 88048 Friedrichshafen (DE)**
• **Knoll, Werner, Dipl.-Ing. 88287 Grünkraut (DE)**

(56) Entgegenhaltungen:
**DE-A- 3 929 497          DE-A- 4 020 350**

EP 0 780 257 B1

**Beschreibung**

Die Erfindung betrifft ein Schleuderschutz-Verfahren zur Regelung der Antriebsdrehzahl eines Fahrzeugs auf das Kraftschlußmaximum zwischen Antriebsrad und Fahrbahn, nach dem Oberbegriff des Patentanspruchs 1.

Solche Schleuderschutz-Verfahren sind aus dem Stand der Technik bekannt. Ziel jedes Schleuderschutz-Regelverfahrens ist es, den Radschlupf, d. h. die Differenz zwischen Umfangsgeschwindigkeit des Antriebsrades und Fahrzeuggeschwindigkeit so zu regeln, daß eine maximale Kraft auf die Schiene übertragen werden kann. Die maximal übertragbare Kraft ist durch das Kraftschlußmaximum zwischen Antriebsrad und Schiene bestimmt, wobei bei Schienenfahrzeugen das Antriebsrad ein wenig Schlupf haben sollte. Ferner ändert sich das Kraftschlußmaximum in weiten Grenzen in Abhängigkeit des Reibungskoeffizienten, der in der Regel für jedes Antriebsrad unterschiedlich ist; ebenso auch der Schlupf. Übersteigt die Fahrzeugmotor-Antriebsleistung das aktuelle Kraftschlußmaximum, so nimmt bei zunehmendem Schlupf nach Überschreiten des Adhäsionsmaximums die übertragbare Zugkraft ab und das Antriebsrad dreht schließlich mit hoher Drehzahl durch. Bei diesem mit "Schleudern" bezeichneten Durchdrehen der Antriebsräder treten ferner ein erhöhter Verschleiß an Rad und Schiene sowie selbsterregte Reibschwingungen zwischen Fahrzeugmotor und Radsatz bzw. zwischen beiden Radscheiben einer Achse auf. Schleudervorgänge sind deshalb möglichst schnell zu erfassen und durch vorübergehende Verkleinerung der Antriebsleistung zu beenden.

Aus der DE 39 29 497 C2, bzw. dessen Zusatzpatent DE 40 20 350 C2 ist ein gattungsgemäßes Verfahren und eine Anordnung zur selbstadaptierenden Regelung der Radsatzdrehzahl elektrischer, laufachsenloser, mit einer Drehmomentenregelung ausgestatteter Triebfahrzeuge bekannt. Bei dem dort beschriebenen Verfahren wirkt ein binäres Ausgangssignal einer Suchlogik auf die Vorgabe des Drehzahlsollwertes. Der jeweils vorgegebene Drehzahlsollwert wird als Stellgröße für den Antrieb wirksam. Wird während einer Beschleuigungsphase des Zuges ein Schleuderzustand erkannt, setzt die Suchlogik das binäre Signal um und gibt damit einen kleineren Drehzahlsollwert, vor, so daß damit die Beschleuigung des Triebrades soweit reduziert wird, bis das Schleudern beendet und der Kraftschluß wieder hergestellt ist. Besteht wieder Kraftschluß, dann setzt die Suchlogik das binäre Signal wieder zurück, worauf der Drehzahlsollwert durch Integration der Solldrehzahl über der Zeit gewonnen wird und schließlich wieder bei maximalem Kraftschluß auf die Solldrehzahl zur Ausregelung der gewünschten Zuggeschwindigkeit zurückschwingt. Mit Erreichen der Solldrehzahl ist der Schleudervorgang ausgeregelt und die Solldrehzahl ist wieder für die Motorregelung wirksam.

Die Nachteile dieser Radsatzdrehzahl-Regelung bestehen darin, daß der gesamte Einschwingvorgang auf die Solldrehzahl relativ lange dauert und infolge der linearen Annäherung des Verlaufs des Drehzahlsollwertanstiegs an die Solldrehzahl ein erneutes Schleudern des Antriebsrads sehr wahrscheinlich ist. In diesem Fall ist der gesamte Schleuderschutz-Regelvorgang von neuem zu durchlaufen. Neben den beschriebenen Nachteilen des Schleuderns von Antriebsrädern dauert die gesamte Ausregelung eines Schleuderzustandes auf die Vorgabe einer gewünschten Zuggeschwindigkeit mit bekannten Drehzahlregelungen relativ lange.

Der Erfindung liegt das Problem zugrunde, ein Schleuderschutz-Verfahren anzugeben, mit dem Störungen des Kraftschlusses zwischen Antriebsrad und Fahrbahn optimiert und schnell ausgeregelt werden können.

Dieses Problem wird bei einem gattungsgemäßen Antriebsdrehzahl-Regelverfahren durch die Merkmale des kennzeichnenden Teils des unabhängigen Anspruchs 1 gelöst. Vorteilhafte Ausgestaltungen sind in den Unteransprüchen angegeben.

Vorteile des erfindungsgemäßen Verfahrens bestehen insbesondere bei der Wahl eines Kurvenverlauf einer Exponentialfunktion, deren Nulldurchgang auf denjenigen aktuellen Drehzahlsollwert gelegt ist, bei dem ein Schleudern des Antriebsrades beendet ist darin, daß diese im schleuderunkritischen Drehzahlbereich den aktuellen Drehzahlwert rasch ansteigen läßt und dadurch eine schnelle Drehzahlzunahme bewirkt. Im weiteren Verlauf der Exponentialfunktion, wenn der aktuelle Drehzahlsollwert inzwischen in den Bereich nahe der gewünschten Solldrehzahl angestiegen ist und damit den kraftschlußkritischen Bereich erreicht, flacht der Exponential-Kurvenverlauf ab und nähert sich asymptotisch der Solldrehzahl. Dementsprechend strebt auch der aktuelle Drehzahlsollwert nur noch asymptotisch der auszuregelnden Drehzahl entgegen. Die damit bewirkte abebbende Beschleunigung des Antriebsrades verhindert ein beschleunigungsbedingtes Wiedereinsetzen von Schleuderzuständen. Durch die erfindungsgemäße aktuelle Drehzahlsollwert-Vorgabe wird deshalb eine Störung des Kraftschlusses zwischen Antriebsrad und Schiene in bedeutend kürzerer Zeit und mit wesentlich geringerem Risiko eines Wiederauftretens von beschleunigungsbedingtem Schleudern beseitigt. Infolgedessen kann eine vorgegebene Solldrehzahl des Fahrzeugs in kürzerer Zeit und mit geringerem Verschleiß erreicht werden.

In einer Weiterbildung der Erfindung ist ferner vorgesehen, die aktuelle Drehzahlsollwert-Erhöhung dann zu unterbrechen, wenn während der Wiederbeschleunigungsphase des Antriebs in Abhängigkeit des aktuellen Drehzahlsollwertes ein erneutes Schleudern auftritt. Mit Erkennen dieses erneuten Schleuderzustandes wird der aktuelle Drehzahlsollwert entlang einer linearen Abwärts-Rampe kontinuierlich soweit reduziert, bis auch dieser Schleuderzustand beendet ist. Der aktuelle Drehzahlsollwert, bei dem erneut Kraftschluß eintritt, bildet dann den Ausgangspunkt der Berechnung eines neuen Exponentialkurvenverlaufs für die aktuellen Drehzahlsollwerte. Die Wiederbeschleunigungsphase der Schleuderschutz-Verfahrens beginnt also nicht wieder bei dem ursprünglichen aktuellen Drehzahlsollwert, sondern setzt bei üblicherweise bereits höherem aktuellem Drehzahlsollwert ein und wird von diesem Wert aus mit qualitativ gleichem vorteilhaftem aktuellem Drehzahlsollwert-Vorgabeverlauf weitergeführt. In jedem der Wiederbeschleunigungsintervalle wird der jeweils optimierte aktuelle Drehzahlsollwert-Verlauf berechnet und vorgegeben. Die eingestellte Solldrehzahl kann so in kurzer Zeit wieder ausgeregelt bzw. erreicht werden.

Ändert sich die auszuregelnde Solldrehzahl-Vorgabe während eine Berechnung der aktuellen Drehzahlsollwerte stattfindet, so sieht das erfindungsgemäße Schleuderschutz-Verfahren folgende drei Ausführungsvarianten vor, um die aktuelle Drehzahlsollwert-Vorgabe auf die tatsächlich geforderte Solldrehzahl zurückzuführen:

1. Die Solldrehzahl vor dem Feststellen eines Schleuderzustandes wird gespeichert und der Berechnung der aktuellen Drehzahlsollwerte zugrundegelegt. Eine veränderte Solldrehzahl wird bei der Berechnung nicht berücksichtigt, sondern nimmt lediglich Einfluß auf die Beendigung des Schleuderschutz-Verfahrens. Das Verfahren gilt als beendet sobald sich der aktuelle Drehzahlsollwert und die momentane Solldrehzahl nur noch um einen vorgebbaren Wert unterscheiden. Diese Ausführung bietet den Vorteil, daß der Wiederbeschleunigungsverlauf jeweils auch dann über die aktuelle Drehzahlsollwert-Vorgabe mit größter Steigung erfolgt, wenn der Fahrzeugführer den Schleuderzustand durch Zurücknehmen der Solldrehzahl manuell abkürzen will.

2. Jeweils die Solldrehzahl bei Feststellen des wiederhergestellten Kraftschlusses bildet die Asymptote des anschließenden Wiederbeschleunigungsintervalls. Innerhalb der einzelnen Intervalle wird der aktuelle Drehzahlsollwert über die jeweils vorgegebene Exponentialfunktion berechnet. Änderungen der Solldrehzahl im Verlauf der einzelnen Intervalle bleiben unberücksichtigt. Auch hier setzt der momentane Drehzahlsollwert lediglich das Ende des Schleuderschutz-Verfahrens fest. Auch diese Form des Verfahrens führt eine möglichst schnelle Ausregelung auf die Solldrehzahl durch.

3. Jede Änderung der Solldrehzahl während der Bearbeitung eines Schleuderzustandes nimmt unmittelbar Einfluß auf die Berechnung des aktuellen Drehzahlsollwerts. indem jeweils die momentan auszuregelnde Solldrehzahl-Vorgabe bei jedem einzelnen Berechnungtakt der Schleuderschutz-Regelung bei der Berechnung des aktuellen Drehzahlsollwerts nach dem erfindungsgemäßen Funktionsverlauf berücksichtigt wird. Ein besonderer Vorteil dieser Variante ist der direkte Einfluß der Solldrehzahl auf den Wiederbeschleuigungsverlauf des aktuellen Drehzahlsollwerts während der Anfahrphase. Je nach Drehzahlsollwert wird dadurch ein Exponentialkurvenverlauf mit unterschiedlicher Steigung berechnet. Der Exponentialkurvenverlauf einer Wiederbeschleuigungsphase kann somit entsprechend der Anzahl der Solldrehzahlveränderungen mehrere Abschnitte mit unterschiedlichen Steigungsverläufen aufweisen und strebt dem momentan vorgegebenen Solldrehzahlwert asymptotisch entgegen. Mit dieser Verfahrensvariante wird der aktuelle

Drehzahlsollwert sowohl bei Reduzierung als auch bei Vergrößerung der Solldrehzahl-Vorgabe jeweils über einen optimierten Exponentialkurvenverlauf berechnet, welcher die Antriebsdrehzahl im kurzer Zeit ohne verfahrensbedingtes Schleuderrisiko auf die Solldrehzahl überführt. Auch hier ist der Schleuderzustand nach Unterschreiten eines vorgebbaren Drehzahldifferenzwertes beendet.

Weitere wesentliche Merkmale und Vorteile der Erfindung enthält die nachfolgende Beschreibung des erfindungsgemäßen Schleuderschutz-Verfahrens anhand zweier in der Zeichnung dargestellter Ausführungsbeispiele. Es zeigt:

Figur 1: ein Flußdiagramm der erfindungsgemäßen Bestimmung des aktuellen Drehzahlsollwerts des Schleuderschutzverfahrens.

Figur 2a: ein Drehzahl-Zeitdiagramm für zwei unterschiedliche aktuelle Drehzahlsollwertverläufe zum Ausregeln von Schleuderzuständen auf eine vorgebbare Solldrehzahl;

Figur 2b: zwei zeitliche Binär-Signalverläufe als Ausgangssignale einer Einrichtung zum Festestellen von Schleuderzuständen;

Figur 2c: zwei zeitliche Signalverläufe, die die Bearbeitung eines Schleuderzustandes anzeigen;

Die Ausführungsbeispiele beziehen sich auf die Schleuderschutz-Regelung einer nicht dargestellten Lokomotive, die beispielweise mittels eines Antriebsmotors mit drehzahlabhängiger Leistungsregelung angetrieben wird. Eine Zugkraftvorgabe wird in einen entsprechenden Solldrehzahlwert $N_S$ gewandelt, der eine Eingangsgröße des Drehzahlreglers ist. Der Drehzahlregler bestimmt aus einer Soll-Istwert-Differenz der Drehzahlen den wirksamen Drehmomenten-Sollwert als Stellgröße für den Antrieb. Bei Verbrennungsmotoren ist dies die Füllung bzw. die einzuspritzende Kraftstoffmenge. Der Antriebsmotor (nicht dargestellt) wirkt über einen Kraftübertragungsblock auf mindestens ein Antriebsrad (nicht dargestellt). Da der Kraftschluß zwischen Antriebsrad und Schiene jedoch u. a. von wechselnden Schienenzuständen abhängt, kann während des Beschleunigens der Lokomotive ein unerwünschtes Schleudern des Antriebsrades auftreten.

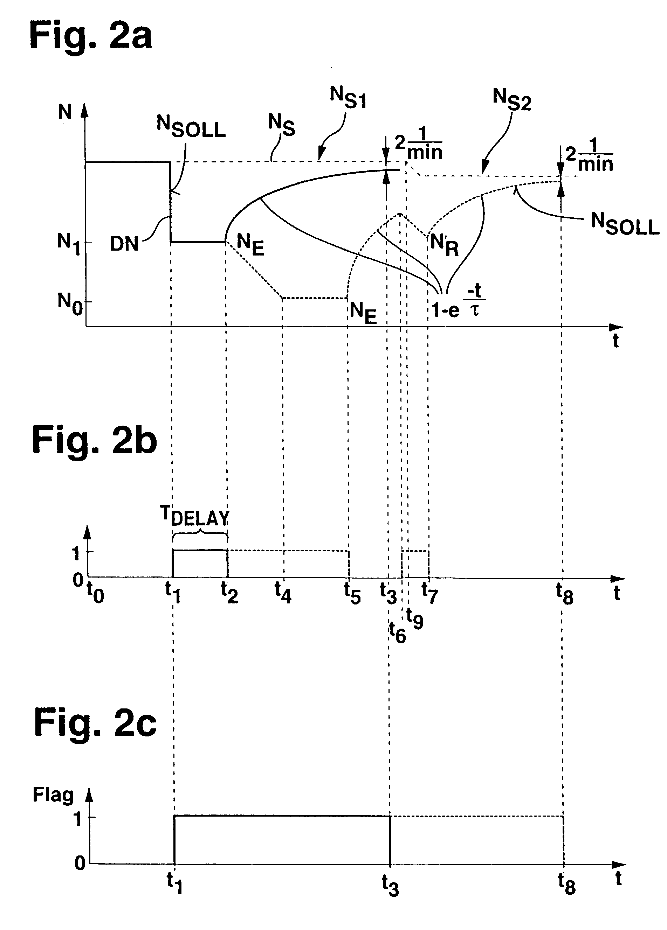

Um die Störung des Kraftschlusses zu beseitigen, ist eine zusätzliche Schleuderschutzregelung vorgesehen, die der Zugkraft-Sollwertvorgabe überlagert wird, sobald ein Schleudern detektiert ist. Schleuderzustände werden z. B. von einer Suchlogik auf bekannte Weise, siehe DE 39 29 497 C2, in Abhängigkeit von der Differenzgeschwindigkeit zwischen Rad und Schiene erkannt und als Binär-Ausgangssignal (Figur 2b) angezeigt. Überschreitet der Schlupf einen vorgegebenen Schwellwert, so wechselt das binäre Ausgangssignal vom Zustand logisch "0" auf den Zustand logisch "1" oder umgekehrt.

Gleichzeitig wird durch das binäre Ausgangssignal die Schleuderschutzregelung der Zugkraft-Sollwertvorgaberegelung überlagert. Während das Schleuderschutzverfahren abläuft, ist der aktuelle Drehzahlsollwert $N_{SOLL}$ für den Motorleistungsregler wirksam.

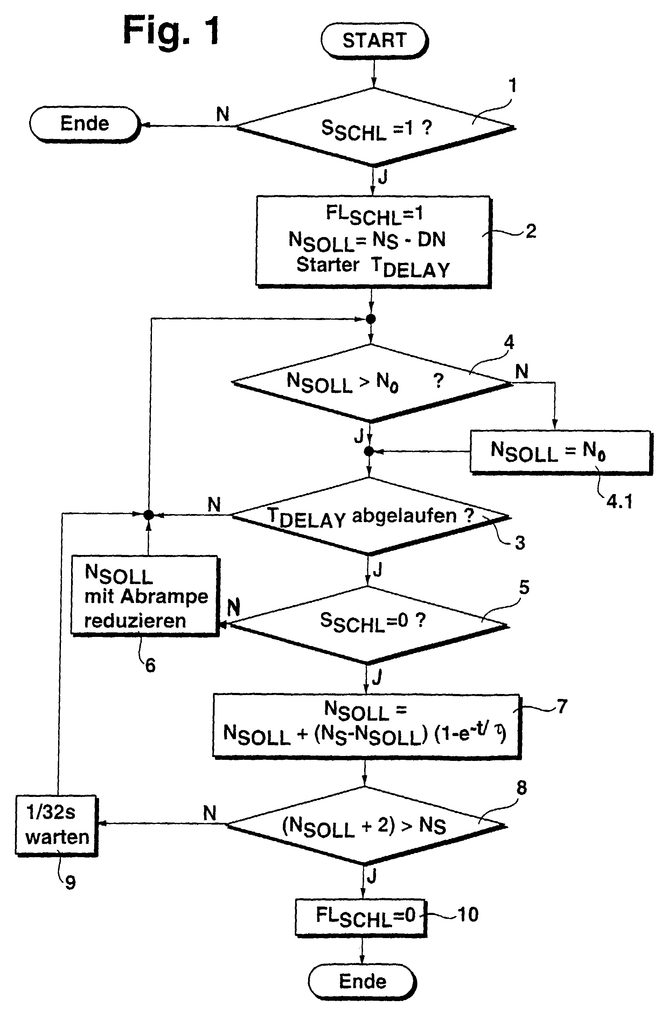

Das erfindungsgemäße Verfahren zur Bestimmung des aktuellen Drehzahlsollwerts $N_{SOLL}$ ist in Figur 1 anhand eines Flußdiagramms aufgezeigt. Da es sich bei den genannten Drehzahlen um Sollwertvorgaben von Regelkreisen handelt, sind den Signalen die physikalischen Größen als Großbuchstaben zugeordnet. Dort sieht die Schleuderschutzregelung zunächst eine Abfrage 1 des binären Ausgangssignals der Suchlogik vor. Liegt der Schaltzustand logisch "0" an, ist kein Schleudern angezeigt; das Schleuderschutzverfahren wird folglich nicht aktiviert. Hat die Suchlogik Schleudern festgestellt und deshalb das Signal auf logisch "1" gesetzt, wird die Schleuderschutzregelung aufgerufen und berechnet den aktuellen Drehzahlsollwert $N_{SOLL}$. Dieser wird für die Dauer der Schleuderzustands-Ausregelung anstelle der Solldrehzahl-Vorgabe $N_S$ dem Motorregler als Soll vorgegeben. Wird also der Binäreingang Schleudern als aktiv "1" erkannt, dann wird der aktuelle Drehzahlsollwert $N_{SOLL}$ berechnet. Und dabei wird die Solldrehzahl $N_S$ sofort um einen bestimmten Wert DN auf den aktuellen Drehzahlsollwert $N_{SOLL}$ reduziert.

Gleichzeitig wird ein Zeitzählsignal $T_{Delay}$ in Gang gesetzt, welches in einer Abfrage laufend mit einem vorgebbaren Zeitwert $T_2$ verglichen wird. Während das Zeitzählsignal $T_{Delay}$ läuft, findet taktweise eine Abfrage 4 statt, ob der aktuelle Drehzahlsollwert $N_{SOLL}$ entweder unter einen Mindestdrehzahlwert $N_0$ gesetzt wurde, oder, zeitlich versetzt, diesen unterschritten hat. Letzteres ist insbesondere dann der Fall, wenn die Solldrehzahl $N_S$ nach Aufruf der Schleuderschutzregelung durch entsprechende Zugkrafteinstellung verkleinert wurde. Ist der aktuelle Drehzahlsollwert $N_{SOLL}$ kleiner als die vorgegebene Mindestdrehzahl $N_0$, dann wird $N_{SOLL}$ im Schritt 4.1 auf die Mindestdrehzahl $N_0$ gesetzt. Nach Ablauf der vorgegebenen Zeit t2 findet eine erneute Abfrage 5 des Binär-Signals statt. Liegt das Signal Schleudern "1" noch an, wird im nächsten Schritt 6 der aktuelle Drehzahlsollwert $N_{SOLL}$ entlang einer Abwärtsrampe weiter abgesenkt, bis Kraftschluß eingetreten ist und die Abfrage 5 ein in den Zustand "0" umgesetztes Binär-Signal erkennt.

Parallel zur Bearbeitung des Schleuderzustands wird der aktuelle Drehzahlsollwert erfaßt und als Eingangssignal für die Motor-Ab-Rampenbestimmung 6 verwendet. Die Rampe kann durch eine beliebige Funktion der Zeit vorgegeben werden. Im anschließend beschriebenen Ausführungsbeispiel ist diese als linear zeitabhängige Funktion mit negativer Steigung vorgegeben.

Ist schließlich in Abfrage 5 der Zustand logisch "0" angezeigt, dient bei taktweise wiederholter Berechnung, bzw. jedem Abarbeiten der Programmschleife der momentan anliegende aktuelle Drehzahlsollwert $N_{SOLL}$ als Ausgangspunkt der Berechnung 7 des zeitlichen Verlaufs des aktuellen Drehzahl-Sollwerts $N_{SOLL}$ als Eingangsgröße für den Motorregler. Der aktuelle Drehzahlsollwert $N_{SOLL}$ wird nach der Gleichung

$$N_{SOLL} = N_{SOLL} + (N_S - N_{SOLL}) \times (1 - e^{-t/\tau})$$

ermittelt. Darin sind $N_S$ jeweils der momentan vorgegebene Solldrehzahlwert, t die Zeit und $\tau$ eine Zeitkonstante, die einen anlagen- und anforderungsspezifischen vorgebbaren Wert darstellt.

Die Berechnung 7 des aktuellen Drehzahl-Sollwerts $N_{SOLL}$ wird nun solange durchgeführt, bis der aktuelle Drehzahl-Sollwert $N_{SOLL}$ und die auszuregelnde Solldrehzahl $N_S$ sich nur noch um einen vorgebbaren Wert unterscheiden. Wegen der erfindungsgemäß asymptotischen Annäherung des Drehzahl-Sollwerts $N_{SOLL}$ an die Solldrehzahl $N_S$, wird der berechnete aktuelle Drehzahl-Sollwert $N_{SOLL}$ die Solldrehzahl $N_S$ nicht endgültig erreichen, geschweige überschreiten. Deshalb ist ein Mindestabstand von beispielsweise 2 ‰ oder 2 1/min vorgegeben, nach dessen Erreichen der Schleuderzustand als ausgeregelt gilt.

Solange der Solldrehzahlwert $N_S$ nicht erreicht ist, wird zunächst eine Wartezeit 9 vorgegeben, nach deren Ablauf das Verfahren ab Schritt 4 erneut abgearbeitet wird. Über diese Wartezeit 9 kann der zeitliche Anstieg des aktuellen Drehzahlsollwerts $N_{SOLL}$ variiert werden.

Hat sich der aktuelle Drehzahlsollwert $N_{SOLL}$ bis auf den vorgegebenen Abstand an die Solldrehzahl $N_S$ angenähert, wird die Schleuderschutzregelung verlassen und der Antriebsmotor von nun an auf die Soll-

drehzahl $N_S$ ausgeregelt. Gleichzeit wird das in Verfahren Schritt 2 gesetzte und während des Schleuderzustandes ausgegebene Flag-Signal, das Bearbeitung des Schleuderzustandes anzeigt, wieder zurückgesetzt.

In Abfrage 8 ist jeweils die momentan angestrebte Solldrehzahl $N_S$ abgespeichert, sodaß das Schleuderschutz-Verfahren auch dann beendet ist, wenn die Solldrehzahl $N_S$ verringert wird und unter den jeweils geltenden, berechneten aktuellen Drehzahl-Sollwert $N_{SOLL}$ abfällt.

Wird während des Anfahrens entlang der Exponentialfunktion, in Schritt 7, das Signal Schleudern "1" wieder aktiv, so ist die Bedingung logisch "0" der Abfrage 5 nicht erfüllt und der aktuelle Drehzahlsollwert $N_{SOLL}$ wird über die Motor-Ab-Rampe wieder abgesenkt - erforderlichenfalls bis die Leerlaufdrehzahl des Motors erreicht ist - bis Kraftschluß eingetreten ist und das Binär-Signal erneut auf logisch "0" umgesetzt wurde. Hat dies stattgefunden wird das Schleuderschutz-Verfahren ab Schritt 7 weiter abgearbeitet.

Die Wirkung des erfindungsgemäßen, in Figur 1 dargestellten Verfahrensablauf soll nun anhand zweier in der Figur 2a dargestellten Sollwertverläufe im Zusammenwirken mit dem in Figur 2b dargestellten Binär-Signal-Verlauf der Suchlogik erläutert werden. In den Figuren 2a, 2b, 2c sind die Signalverläufe zweier Schleuderzustände gezeigt, wobei jeweils ein erster Schleuderzustand ausgezogen und ein zweiter Schleuderzustand gepunktet dargestellt sind. In Figur 2a ist zusätzlich ein Verlauf des Solldrehzahl-Signals $N_S$ gestrichelt eingetragen. Wo dies möglich ist, werden bei beiden Kurvenverläufen gleiche Bezugszeichen verwendet.

Zum Zeitpunkt $t_0$ ist der aktuelle Drehzahlsollwert $N_{SOLL}$ gleich der Solldrehzahl $N_S$, das Binär-Signal (Figur 2b) ist im Zustand logisch "0" und folglich ist auch das Signal der Schleuderzustand-Anzeige in Figur 2c null; die Antriebsräder schleudern demnach nicht. Am Motorregler liegt das Solldrehzahl-Signal $N_S$ wirksam an und wird im einem geschlossenen Regelkreis im Motor umgesetzt.

Zum Zeitpunkt t1 spricht die Suchlogik an und setzt das Binär-Signal "1". Am Binäreingang der Schleuderschutz-Regelung wird dadurch Schleudern als aktiv erkannt und es folgt eine schnelle Drehzahlverringerung von $N_{S1}$ um den Betrag DN auf $N_1$. Gleichzeitig mit dem Umsetzten des Binär-Signals auf logisch "1" wird ein Flag-Signal (Figur 2c) ausgegeben, welches dem Fahrzeugführer das Bearbeiten des Schleuderzustandes anzeigt.

Der aktuelle Drehzahlsollwert $N_1$ liegt im Zeitpunkt t2 als konstante Sollwertvorgabe am Motorregler an. In den meisten Fällen kann durch die Drehzahlreduzierung bei auftretendem Schleudern der Kraftschluß zwischen Antriebsrad und Schiene wieder hergestellt werden. Für diesen Fall wird im Figur 2a zum Zeitpunkt $t_2$ das Binär-Signal der Suchlogik auf logisch "0" zurückgesetzt. Da damit der Schleuderschutz-Regelung wieder der Kraftschluß angezeigt ist, beginnt diese mit der Berechnung des aktuellen Drehzahlsollwerts $N_{SOLL}$ nach dem erfindungsgemäßen Exponentialfunktionsverlauf und gibt damit die Drehzahlzunahme für die Wiederbeschleunigung der Antriebsräder vor.

Beginnend bei dem aktuellen Drehzahlsollwert $N_E$ zum Zeitpunkt $t_2$ wird der aktuelle Drehzahlsollwert $N_{SOLL}$ zunächst rasch vergrößert. In diesem Bereich, kurz nach wiederaufgebautem Kraftschluß, liegt die Grenze der Adhäsionskräfte zwischen Antriebsrad und Schiene deutlich höher als die bei diesem vorgegebenen aktuellen Drehzahl-Sollwert $N_{SOLL}$ zu übertragenden Antriebskräfte. Diese Kraftschlußreserve wird erfindungsgemäß verwendet durch die schnelle Beschleunigung bzw. den charakteristischen Verlauf der akuellen Drehzahlsollwert-Vorgabe $N_{SOLL}$. Eben diese Kurvencharakteristik zeigt Exponentialfunktion (e-Funktion) und eine Logarithmusfunktion als deren Umkehrfunktion. Zur aktuellen Drehzahlsollwert-Vorgabe $N_{SOLL}$ ist die Exponentialfunktion so gelegt, daß der aktuelle Drehzahlsollwert $N_E$ bei dem Kraftsschluß wieder eintritt und das Ende des Schleuderns von der Suchlogik zum Zeitpunkt $t_2$ erkannt ist, den Ausgangspunkt des Funktionsverlaufs bildet. Im weiteren Verlauf strebt jede Exponentialfunktion asymptotisch einem Grenzwert entgegen. Diesen Grenzwert bildet beim erfindungsgemäßen Gebrauch der Exponentialfunktion die jeweils angestebte Solldrehzahl $N_S$; hier $N_{S1}$. Besonderer Vorteil dieser asymptotischen Annäherung ist die mit zunehmender Zeit kleiner werdende Steigung des Kurvenverlaufs. Exakt diese Kurvencharakteristik stellt die Ideallinie eines Regelsignals dar, dessen Reglerantwort einen angestrebten Grenzwert möglichst harmonisch und ohne Überschwingen einnehmen soll. Bei der Erfindung stellt der aktuelle Drehzahlsollwert $N_{SOLL}$ das Regelsignal und das Motordrehmoment, ausgedrückt als Drehzahl des Antriebs, die Regelantwort dar. Stellgröße ist die Motorfüllung $m_{br}$. Hier wird ferner davon ausgegangen, daß die Umsetzung bzw. die Ausregelung einer aktuellen Drehzahlsollwert-Vorgabe in eine entsprechende Motorabgangs- bzw. Antriebsdrehzahl mittels geschlossenem Regelkreis möglichst direkt und schnell erfolgt. Tatsächlich verhindert der asymptotische Verlauf des aktuellen Drehzahlsollwerts $N_{SOLL}$ ein beschleunigungsbedingtes Wiederauftreten von Schleudern dadurch, daß der zur Beschleunigung auszuregelnde Drehmomentenanteil des Antriebsdrehmoments bei Annäherung an die Solldrehzahl $N_S$ dem Exponentialverlauf folgend reduziert wird und schließlich auch nahe $N_S$ den zum stationären Halten der Solldrehzahl $N_S$ nötigen Drehmomentenwert nicht übersteigt; es wird kein Schleudern provoziert.

Zum Zeitpunkt $t_3$ hat der aktuelle Drehzahlsollwert $N_{SOLL}$ einen Wert erreicht, der 2 1/min kleiner ist als die angestrebte Solldrehzahl $N_S$. Mit Erreichen dieses vorgegebenen Unterschieds gilt der Schleuderzustand als ausgeregelt und die Solldrehzahl $N_{S1}$ ist wieder für den Motorregler wirksam. Das Flag-Signal in Figur 2c wird auf "Null" gesetzt.

Der gepunktete Verlauf des aktuellen Drehzahlsollwerts $N_{SOLL}$ in Figur 2a entspricht bis zum Zeitpunkt $t_2$ dem ausgezogenen Verlauf, sodaß hierfür die oben gemachten Ausführungen ebenfalls zutreffen. Im Unterschied dazu liegt nach $t_2$ das Binär-Signal Schleudern "1" noch an. Ausgehend von $N_E$ wird deshalb der aktuelle Drehzahlsollwert $N_{SOLL}$ entlang der Motor-Ab-Rampe weiter abgesenkt. Dieser erreicht im Zeitpunkt $t_4$ $N_0$, das ist die Leerlaufdrehzahl des Motors. Nachdem ab $t_4$ keine Drehzahlzunahme vorgegeben wurde ($N_{SOLL}$ gleich $N_0$), faßt das Antriebsrad zum Zeitpunkt $t_5$ wieder, was durch ein Umsetzen des Binär-Signals (Figur 2b) in seinen Zustand "0" angezeigt ist.

Parallel zum Bearbeiten des Schleudervorgangs bis $t_5$ wird der Eingang Solldrehzahl $N_S$ erfaßt und als Eingangssignal für die Motor-Ab-Rampenberechnung 6 in Figur 1 verwendet. Der Rampenwert $N_E$ zum Zeitpunkt $t_5$ dient als Ausgangspunkt der Exponentialfunktion, zur Berechnung des aktuellen Drehzahlsollwerts $N_{SOLL}$, mit welcher die gewünschte Solldrehzahl $N_{S1}$ wieder angefahren wird. Da die Solldrehzahl $N_S$ bis $t_5$ nicht verändert wurde, dient der Sollwert $N_{S1}$ zum Zeitpunkt $t_1$ als Asymptote der Exponentialfunktion.

Während des Wiederbeschleunigens des Zuges über die Expotentialfunktion wird das Binär-Signal zum Zeitpunkt $t_6$ wieder aktiv "1"; die Antriebsräder schleudern folglich wieder. Sofort wird der aktuelle Drehzahlsollwert $N_{SOLL}$ über die Motor-Ab-Rampe wieder abgesenkt bis zum Zeitpunkt $t_7$ bei einem aktuellen Drehzahlsollwert $N_R$ das Binär-Signal schleudern inaktiv "0" wird. Der Rampenwert $N_R$ den der aktuelle Drehzahlsollwert $N_{SOLL}$ zum Zeitpunkt $t_7$ einnimmt, dient nun als neuer Ausgangspunkt für eine neu beginnende Berechnung der aktuellen Drehzahlsollwerte $N_{SOLL}$. Während des Wiederanfahrens über die E-Funktion wird die Solldrehzahl $N_S$ zum Zeitpunkt $t_9$ auf einen niedrigeren Wert $N_{S2}$ abgesenkt. Ab jetzt wird die Solldrehzahl $N_{S2}$ zu der erneuten Berechnung des aktuellen Drehzahlsollwertes $N_{SOLL}$ herangezogen und bildet nun die Asymptote für den Einschwingverlauf über die Exponentialfunktion in der Zeit zwischen $t_7$ und $t_8$.

Der Vorgang des Wiederabsenkens des Drehzahlsollwerts $N_{SOLL}$ entlang der Motor-Ab-Rampe und des Wiederbeschleunigens wiederholt sich so oft erneutes Schleudern einsetzt und bis die angestrebte Solldrehzahl $N_S$ als erreicht gilt. Dieser Vorgang und der gesamte Schleuderzustand gelten als beendet, wenn der aktuelle Drehzahlsollwert $N_{SOLL}$ bei $t_8$ sich bis auf 2 1/min an die Solldrehzahl $N_{S2}$ angenähert hat. Dann wird auch für diesen Schleuderzustand das Flag-Signal inaktiv und am Motorregler liegt wieder das Solldrehzahl-Signal $N_S$ wirksam an. Fällt durch eine Zurücknahme der Solldrehzahl $N_S$ der Vorgabewert unter diese Grenze, so gilt der Schleuderzustand als beendet und die Motorsolldrehzahl $N_S$ fährt auf der Motor-Ab-Rampe 6 (Figur 1) zum neuen Solldrehzahlwert.

**Patentansprüche**

1. Schleuderschutz-Verfahren zur Regelung der Antriebsdrehzahl eines Fahrzeugs während eines Schleuderzustands, bei dem zum Ausregeln der Antriebsdrehzahl auf eine vorgegebene Solldrehzahl ($N_S$) bei Erkennen einer Störung des Kraftschlusses, dem vorgegebenen Solldrehzahl-Signal ($N_S$) eines Motorreglers eine dynamische Regelung zur Bildung eines aktuellen Drehzahlsollwertes ($N_{SOLL}$) solange überlagert wird, bis der aktuelle Drehzahlsollwert ($N_{SOLL}$) die vorgegebene Solldrehzahl ($N_S$) erreicht, wobei der aktuelle Drehzahlsollwert ($N_{SOLL}$) zunächst soweit reduziert wird, bis Kraftschluß wieder eintritt und dann nach Beendigung der Störung zeitabhängig wieder auf die vorgegebene Solldrehzahl ($N_S$) ausgeregelt wird, <u>dadurch gekennzeichnet,</u> daß der aktuelle Drehzahlsollwert ($N_{SOLL}$) entlang einer Exponentialfunktion auf die Solldrehzahl ($N_S$) ausgeregelt wird, wobei der aktuelle Drehzahlsollwert bei Beendigung der Störung des Kraftschlusses ($N_E$; $N_R$) den Ausgangspunkt und die vorgegebene Solldrehzahl ($N_S$) die Asymptote der Exponentialfunktion bilden.

2. Verfahren nach Anspruch 1, <u>dadurch gekennzeichnet,</u> daß der aktuelle Drehzahlsollwert $N_{SOLL}$ entlang einer Exponentialfunktion und in Abhängigkeit der vorgegebenen Solldrehzahl ($N_S$) bestimmt wird nach der Gleichung

$$N_{SOLL} = N_E + (N_S - N_E) \times (1 - e^{-t/\tau})$$

mit:

$N_E =$     aktueller Drehzahlsollwert bei Beendigung der Störung des Kraftschlusses;

$N_S =$     Solldrehzahl-Vorgabe;

$t =$     Zeit

$\tau =$     Zeitkonstante (projektspezifisch eingebbarer Wert).

3. Verfahren nach Anspruch 1 oder 2, <u>dadurch gekennzeichnet,</u> daß bei Feststellen einer Störung des Kraftschlusses ($t_6$; "1") während des Ausregelns des aktuellen Drehzahlsollwerts ($N_{SOLL}$) auf die Solldrehzahl ($N_{S1}$) der aktuelle Drehzahlsollwert ($N_{SOLL}$) erneut abgesenkt wird, bis Kraftschluß wieder hergestellt ist und, daß der aktuelle Drehzahlsollwert ($N_R$) zu diesem Zeitpunkt ($t_7$) als Ausgangspunkt für eine neue Berechnung der Exponentialfunktion dient, mit der die gewünschte Solldrehzahl ($N_{S2}$) angefahren wird.

4.    Verfahren nach Anspruch 1, <u>dadurch gekennzeich-</u> <u>net,</u> daß der aktuelle Drehzahlsollwert ($N_{SOLL}$) nach Ablauf einer vorgegebenen Zeitdauer ($t_{Delay}$) bei festgestelltem Schleudern ($t_2$; $t_6$; "1") entlang einer linearen zeitabhängigen Funktion mit negativer Steigung bis maximal auf die Leerlaufdrehzahl ($N_0$) des Motors abgesenkt wird.

5.    Verfahren nach Anspruch 4, <u>dadurch gekennzeich-</u> <u>net,</u> daß nach einer Drehzahlsollwertabsenkung bis auf die Mindestdrehzahl ($N_0$) der aktuelle Drehzahl- sollwert ($N_{SOLL}$) konstant auf diesem Wert ($N_0$) ge- halten wird, bis Kraftschluß wiedereintritt ($t_5$; "0") oder die Solldrehzahl ($N_S$) auf die Leerlaufdrehzahl ($N_0$) gestellt ist.

6.    Verfahren nach Anspruch 1, <u>dadurch gekennzeich-</u> <u>net,</u> daß die Solldrehzahl ($N_S$) bei Feststellen von Schleudern ($t_1$; "1") für die Berechnung des Funktionsverlaufs verwendet wird.

7.    Verfahren nach Anspruch 4, <u>dadurch gekennzeich-</u> <u>net,</u> daß die Solldrehzahl ($N_{S2}$) zum Zeitpunkt ($t_7$), wenn Kraftschluß ("0") wieder hergestellt ist, für die Berechnung des Funktionsverlaufs verwendet wird.

**Claims**

1.    Antislip protection method for controlling the drive speed of a vehicle during a slip state, in the case of which for the purpose of correcting the drive speed to a prescribed setpoint speed ($N_S$) upon detection of a failure of adhesion, for the purpose of forming a current setpoint speed value ($N_{SOLL}$) dynamic control is superimposed on the prescribed setpoint speed signal ($N_S$) of an engine controller until the current setpoint speed value ($N_{SOLL}$) reaches the prescribed setpoint speed ($N_S$), the current setpoint speed value ($N_{SOLL}$) firstly being reduced until adhesion reoccurs, and then being corrected again to the prescribed setpoint speed ($N_S$) as a function of time after termination of the failure, characterized in that the current setpoint speed value ($N_{SOLL}$) is corrected to the setpoint speed ($N_S$) along an exponential function, the current setpoint speed value upon termination of the failure of adhesion ($N_E$; $N_R$) forming the starting point, and the prescribed setpoint speed ($N_S$) forming the asymptote of the exponential function.

2.    Method according to Claim 1, characterized in that the current setpoint speed value $N_{SOLL}$ is determined along an exponential function and as a function of the prescribed setpoint speed ($N_S$) using the equation

$$N_{SOLL} = N_E + (N_S - N_E) \times (1 - e^{-t/\tau})$$

where:

$N_E$ =    current setpoint speed value upon termination of the failure of adhesion;
$N_S$ =    setpoint speed prescription;
$t$ =    time;
$\tau$ =    time constant (value which can be input in a project-specific fashion).

3.    Method according to Claim 1 or 2, characterized in that upon detection of a failure of adhesion ($t_6$; "1") during the correction of the current setpoint speed value ($N_{SOLL}$) to the setpoint speed ($N_{S1}$), the current setpoint speed value ($N_{SOLL}$) is lowered again until adhesion is restored, and in that the current setpoint speed value ($N_R$) at this instant ($t_7$) serves as starting point for a new calculation of the exponential function with the aid of which the desired setpoint speed ($N_{S2}$) is approached.

4.    Method according to Claim 1, characterized in that upon expiry of a prescribed time period (toelay) in the case of detected slip ($t_2$; $t_5$; "1"), the current set- point speed value ($N_{SOLL}$) is lowered along a linear time-dependent function with a negative gradient down to at most the idle speed ($N_0$) of the engine.

5.    Method according to Claim 4, characterized in that after a lowering of the setpoint speed value down to the minimum speed ($N_0$), the current setpoint speed value ($N_{SOLL}$) is kept constant at this value ($N_0$) until adhesion reoccurs ($t_5$; "0") or the setpoint speed ($N_S$) is set to the idle speed N0.

6.    Method according to Claim 1, characterized in that the setpoint speed ($N_S$) is used to calculate the functional profile upon detection of slip ($t_1$; "1").

7.    Method according to Claim 4, characterized in that the setpoint speed ($N_{S2}$) at the instant ($t_7$) when ad- hesion ("0") is restored is used to calculate the functional profile.

**Revendications**

1.    Procédé de protection contre le dérapage pour la régulation de la vitesse de rotation de l'entraînement d'un véhicule pendant une situation de dérapage, dans lequel, pour la régulation de la vitesse de rotation de l'entraînement à une vitesse de rotation de consigne prédéterminée ($N_S$) lors de la détection d'une perte de l'adhérence, on superpose au signal de la vitesse de rotation de consigne prédéterminée ($N_S$) d'un régulateur du moteur une régulation dynamique pour former une valeur de consigne de la vitesse de rotation actuelle ($N_{CONS}$) jusqu'à ce que la valeur de consigne de la vitesse de rotation actuelle ($N_{CONS}$) atteigne la vitesse de rotation de consigne prédéterminée ($N_S$), la valeur de consigne de la vitesse de rotation actuelle ($N_{CONS}$) étant d'abord réduite jusqu'à ce que l'adhérence se rétablisse et étant ensuite, après la fin de la perte de l'adhérence, à nouveau régulée en fonction du temps à la vitesse de rotation de consigne prédéterminée ($N_S$), caractérisé en ce que l'on régule la valeur de consigne de la vitesse de rotation actuelle ($N_{CONS}$) à la vitesse de rotation de consigne ($N_S$) en suivant une fonction exponentielle, la valeur de consigne de la vitesse de rotation actuelle à la fin de la perte de l'adhérence ($N_E$; $N_R$) constituant le point d'origine et la vitesse de rotation de consigne prédéterminée ($N_S$) constituant l'asymptote de la fonction exponentielle.

2. Procédé suivant la revendication 1, caractérisé en ce que l'on détermine la valeur de consigne de la vitesse de rotation actuelle ($N_{CONS}$) en suivant une fonction exponentielle et en fonction de la vitesse de rotation de consigne prédéterminée ($N_S$) conformément à l'équation

$$N_{CONS} = N_E + (N_S - N_E) \times (1 - e^{-t/\tau})$$

dans laquelle

$N_E$ = valeur de consigne de la vitesse de rotation actuelle à la fin de la perte de l'adhérence;
$N_S$ = prévision de la vitesse de rotation de consigne;
$t$ = temps;
$\tau$ = constante de temps (valeur à déterminer en fonction du projet).

3. Procédé suivant la revendication 1 ou 2, caractérisé en ce que, si l'on constate une perte de l'adhérence ($t_6$; "1") pendant la régulation de la valeur de consigne de la vitesse de rotation actuelle ($N_{CONS}$) à la vitesse de rotation de consigne ($N_{S1}$), on abaisse à nouveau la valeur de consigne de la vitesse de rotation actuelle ($N_{CONS}$) jusqu'à ce que l'adhérence se soit rétablie, et en ce que la valeur de consigne de la vitesse de rotation actuelle ($N_R$) à cet instant ($t_7$) sert de point d'origine pour un nouveau calcul de la fonction exponentielle avec laquelle la vitesse de rotation de consigne désirée ($N_{S2}$) est atteinte.

4. Procédé suivant la revendication 1, caractérisé en ce que l'on abaisse la valeur de consigne de la vitesse de rotation actuelle ($N_{CONS}$), après écoulement d'une durée prédéterminée ($t_{Delay}$) en cas de constatation d'un dérapage ($t_2$; $t_5$; "1"), en suivant

une fonction temporelle linéaire à pente négative au maximum jusqu'à la vitesse de rotation au ralenti ($N_0$) du moteur.

5. Procédé suivant la revendication 4, caractérisé en ce qu'après un abaissement de la valeur de consigne de la vitesse de rotation jusqu'à la vitesse de rotation minimale ($N_0$), on maintient la valeur de consigne de la vitesse de rotation actuelle ($N_{CONS}$) constante à cette valeur ($N_0$) jusqu'à ce que l'adhérence se rétablisse ($t_5$; "0") ou que la vitesse de rotation de consigne ($N_S$) soit amenée à la vitesse de rotation du ralenti ($N_0$).

6. Procédé suivant la revendication 1, caractérisé en ce que l'on utilise la vitesse de rotation de consigne ($N_S$) lors de la constatation d'un dérapage ($t_1$; "1") pour le calcul de la courbe de la fonction.

7. Procédé suivant la revendication 4, caractérisé en ce que l'on utilise la vitesse de rotation de consigne ($N_{S2}$) à l'instant ($t_7$), lorsque l'adhérence ("0") s'est rétablie, pour le calcul de la courbe de la fonction.

# Fig. 1

START

1

$S_{SCHL} = 1$ ? — N → Ende

J

2

$FL_{SCHL} = 1$
$N_{SOLL} = N_S - DN$
Starter $T_{DELAY}$

4

$N_{SOLL} > N_0$ ? — N

J

4.1

$N_{SOLL} = N_0$

3

$T_{DELAY}$ abgelaufen ? — N

J

5

$S_{SCHL} = 0$ ? — N → 6

$N_{SOLL}$ mit Abrampe reduzieren

J

7

$N_{SOLL} = N_{SOLL} + (N_S - N_{SOLL}) (1 - e^{-t/\vartheta})$

8

$(N_{SOLL} + 2) > N_S$ — N → 1/32s warten

9

J

10

$FL_{SCHL} = 0$

Ende

Fig. 2a

Fig. 2b

Fig. 2c